# EUROPEAN PATENT SPECIFICATION

(11) **EP 1 657 479 B1**
(45) Date of publication and mention of the grant of the patent: **07.07.2010**
(21) Application number: 05021674.6
(22) Date of filing: 04.10.2005
(51) Int. Cl.: F16L 37/092, F16L 33/22

(54) **Plug-in coupling**
Steckkupplung
Raccord enfichable

(30) Priority: 11.11.2004 JP 2004327895
(43) Date of publication of application: 17.05.2006
(73) Proprietor: Tabuchi Co., Ltd., Osaka-shi, Osaka 547-0023, (JP)
(72) Inventor: Tokuda, Masay c/o Tabuchi Co., Ltd., Osaka-shi, Osaka 547-0023 (JP)
(74) Representative: Hering, Hartmut

(56) References cited:
- DE-A1- 10 221 971
- DE-A1- 19 959 067
- US-A1- 2002 163 191
- PATENT ABSTRACTS OF JAPAN vol. 2003, no. 12, 5 December 2003 (2003-12-05) -& JP 2004 232746 A (SEKISUI CHEM CO LTD), 19 August 2004 (2004-08-19)
- PATENT ABSTRACTS OF JAPAN vol. 2003, no. 12, 5 December 2003 (2003-12-05) & JP 2004 324858 A (SEKISUI CHEM CO LTD; HIGASHIO MECH CO LTD; INOUE SUDARE KK), 18 November 2004 (2004-11-18)

## Description

The present invention relates to a soft pipe joint for use as a water pipe and, in particular, to a soft pipe joint having a new gasket structure.

A variety of pipe joints for connecting soft pipes has been developed. Not only soft pipes, but also three-layered pipes, each composed top and bottom resin layers and an intermediate aluminum layer interposed therebetween, are increasingly used. These pipes need to be connected using a joint.

Japanese Unexamined Patent Application Publication No. 2004-232746, considered as closest prior art to the invention, discloses a pipe joint.

In the disclosed pipe joint, a gasket is arranged on a ring-shaped projection formed in the middle of an inner cylinder. Using an adhesive agent, the gasket is fixed to the projection to prevent a resin pipe from coming off and being damaged during the connection of the pipe. In another known pipe joint, a ring-shaped cushioning member is arranged so that the end of the resin pipe is not in contact with the gasket.

Since the gasket is directly fixed using an adhesive agent, variations in quality error. The use of the adhesive agent adversely affects the environment, and a manufacturing step of fixing the gasket using the adhesive agent is not preferable from the standpoint of manufacturing efficiency. In the known technique of arranging the cushioning member, the effectiveness of the cushioning member is not sufficiently exploited if the resin pipe is connected gradually rather than at one stroke.

US 2002/163191 A1, being considered as closest prior art document, discloses a pipe joint comprising a joint body having an inner cylinder to be inserted into a pipe, a joint case arranged outside the inner cylinder and connected to the joint body, a chuck ring arranged in the joint case, and a gasket arranged on the outer circumference of the inner cylinder. The inner cylinder includes a circular recess extending on the outer circumference thereof and having a certain width along the axial direction of the inner cylinder, and a ring-shaped projection extending in the middle of the axial extension of the circular recess. The gasket includes, at a position in alignment with the projection, a circular groove that receives the ring-shaped projection. Further, the gasket, for reliably avoiding any displacement thereof out of the recess, comprises circular projected portions extending along the outer circumference thereof.

DE-A-19959067 discloses a pipe joint, wherein a joint body comprises grooves and a gasket comprises a corresponding profile for fixing the gasket on the joint body.

It is the object of the present invention to provide a pipe joint that provides ease of use and reliable quality with a simple structure.

This object is solved by a pipe joint as it is described in independent claim 1. Dependent claim 2 shows advantageous further developments of the pipe joint of claim 1.

A pipe joint of one embodiment includes a joint body having an inner cylinder to be inserted into a pipe, a joint case arranged outside the inner cylinder and connected to the joint body, a chuck ring arranged in front of the joint case, a cap nut holding the chuck ring inside therewith and screwed around the forward end of the joint case, and a gasket arranged on the outer circumference of the inner cylinder. The inner cylinder includes a circular recess extending on the outer circumference thereof and having a certain width along the axial direction of the inner cylinder, wherein the gasket is placed around the circular recess. The inner cylinder further includes a ring-shaped projection extending in the middle of the axial extension of the circular recess, and the gasket includes, at a position in alignment with the projection, a circular groove that receives the ring-shaped projection. In addition, the gasket further comprises at least one circular projected portion extending along the inner circumference thereof, and the inner cylinder further comprises a circular groove arranged in a position in alignment with the circular projected portion.

Thus, according to the present invention, the gasket is reliably positioned with respect to the inner cylinder. Further, the gasket is prevented from sliding backward along the inner cylinder when the pipe is inserted.

The axial width of the gasket is smaller than the axial width of the circular recess, and a relief space equal to a difference between the axial width of the gasket and the axial width of the circular recess is arranged behind the gasket. When the pipe is inserted into the pipe joint, the gasket is likely to be expanded in distortion. Such a distortion can be accommodated in the relief space.

Preferably, the gasket comprises at least one circular projected portion extending along the outer circumference thereof. The use of such a circular projected portion assures watertightness.

The pipe joint of embodiments of the present invention finds widespread use in connecting known soft pipes, three-layered pipes including top and bottom resin layers and an intermediate metal layer interposed between the two resin layers, and metal pipes. However, the use of the pipe joint of the embodiments of the present invention in the connection of a very soft pipe, such as polypropylene pipe, is not appropriate. The pipe joint of the embodiments of the present invention is intended to achieve watertightness between the gasket and the inner circumference of a pipe to be connected.

With the simple structure thus described, a resin pipe, for example, is easily inserted into the pipe joint in a manner free from damaging the gasket.

### BRIEF DESCRIPTION OF THE DRAWINGS

Fig. 1 is a partial sectional view of a pipe joint of one embodiment of the present invention; and
Fig. 2 is an expanded partial sectional view of the pipe joint illustrating the relationship between a groove and a gasket.

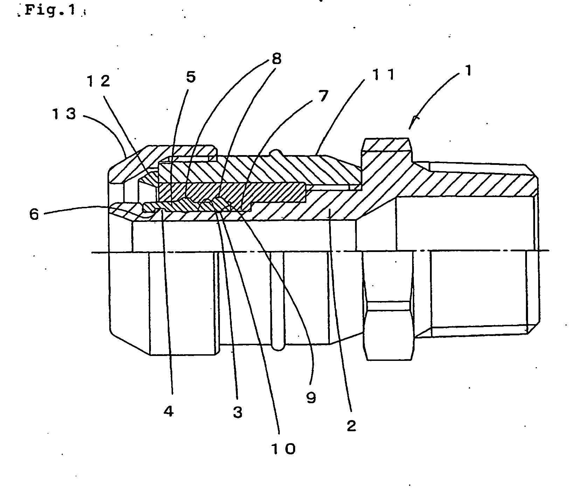

The preferred embodiments of the present invention are described below with reference to the drawings. Fig. 1 is a partially sectional view of a pipe joint body 1 of one embodiment of the present invention. The pipe joint is not connected to a pipe. There are shown a pipe joint body 1 includes an inner cylinder 2 integrally formed with the pipe joint body 1, a circular recess 3 partly extending along the outer circumference of the inner cylinder 2 and having a constant width in the axial direction of the inner cylinder 2, and a circular projection 4 partially extending along the circumference of the pipe joint body 1 in the circular recess 3. The ring-shaped projection 4 does not protrude in radial height above the circumference of the inner cylinder 2. A gasket 5 is placed around the circular recess 3. The gasket 5 has a circular groove 6 that receives the ring-shaped projection 4. The length from the forward end of the circular recess 3 to the ring-shaped projection 4 is approximately equal to the length from the forward end of the gasket 5 to the circular groove 6. The width of the gasket 5 in the axial direction thereof is smaller than the width of the circular recess 3. Dimensions of the widths are designed so that a relief space 7 is reserved when the gasket 5 is placed in the circular recess 3. The gasket 5 includes two circular projection portions 8 to assure sufficient watertightness when the pipes are connected.

The gasket 5 also includes low-profile circular projected portions 9 arranged on the inner circumference thereof. The inner cylinder 2 includes circular grooves 10 at positions in alignment with the circular projected portions. With the circular projected portions 9 received in the respective circular grooves 10, the gasket 5 is prevented from coming off from the inner cylinder 2. The number of circular projected portions 9 and circular grooves 10 is not limited to two. The number of circular projected portions 9 and circular grooves 10 may or may be larger than two. Also shown in Fig. 1 are a joint case 11 to be connected to the pipe joint body 1, a chuck ring 12, and a cap nut 13. The joint case 11 is screwed around the pipe joint body 1 for assembly, and a pipe is inserted between the inner cylinder 2 and the joint case 11. The joint case 11, the chuck ring 12, and the cap nut 13 are those of known arts, but are not limited to any particular known arts.

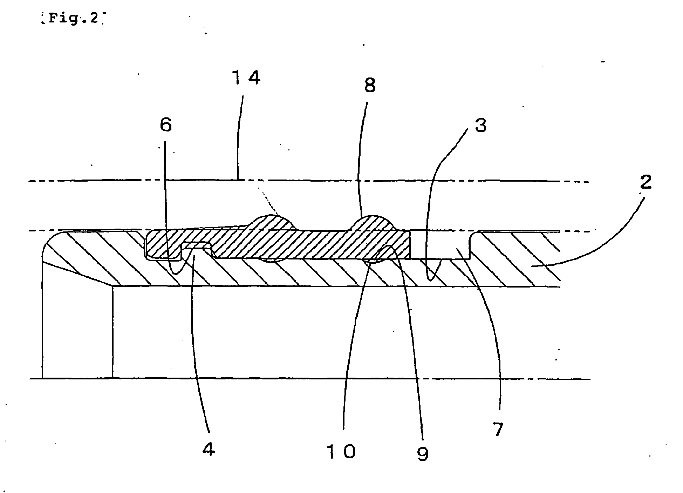

Fig. 2 is an enlarged partially sectional view to reveal the relationship between the gasket 5 and the circular recess 3 of Fig. 1. A pipe 14, outlined by two-dot-and-dash chain line, is connected with the pipe joint body 1. The gasket 5 extends from the forward end portion of the inner cylinder 2 (the left end of the inner cylinder 2 in Fig. 2) toward the backward portion of the inner cylinder 2. With the ring-shaped projection 4 arranged in the circular recess 3 received in the circular groove 6, the gasket 5 is fixed with respect to the inner cylinder 2. The relief space 7 is arranged. When the pipe 14 is connected to the pipe joint body 1, the gasket 5 is deformed in the direction of insertion of the pipe 14 with frictional force. Such a deformation is accommodated in the relief space 7. In other words, the presence of the relief space 7 reduces the insertion resistance to the pipe 14. The pipe 14 typically has an end surface perpendicular to the longitudinal axis thereof, but may have an end surface diagonal to the longitudinal axis thereof. Such a diagonal end surface can damage the gasket 5 when the pipe 14 is inserted. The relief space 7 accommodates the deformation of the gasket 5, thereby preventing the gasket 5 from being damaged.

With the ring-shaped projection 4 in the circular recess 3 received in the circular groove 6 of the gasket 5, the gasket 5 is fixed to a predetermined position. The gasket 5 is thus prevented from being displaced backward when the pipe 14 is inserted. Even when a pipe 14 having a diagonally cut end surface is inserted, the gasket 5 is prevented from being slipped.

The gasket 5 also includes circular projection portions 8 on the outer circumference thereof. The use of the circular projection portions 8 keeps insertion resistance to the pipe 14 modest while assuring watertightness. Instead of the circular projection portions 8, the gasket 5 can have a portion gradually tapered larger in diameter toward backward end thereof.

## Claims

1. A pipe joint comprising a joint body (1) having an inner cylinder (2) to be inserted into a pipe, a joint case (11) arranged outside the inner cylinder (2) and connected to the joint body (1), a chuck ring (12) arranged in front of the joint case (11), a cap nut (13) holding the chuck ring (12) inside therewith and screwed around the forward end of the joint case (11), and a gasket (5) arranged on the outer circumference of the inner cylinder (2), wherein
the inner cylinder (2) includes a circular recess (3) extending on the outer circumference thereof and having a certain width along the axial direction of the inner cylinder (2), wherein the gasket (5) is placed around the circular recess (3),
the inner cylinder (2) further includes a ring-shaped projection (4) extending in the middle of the axial extension of the circular recess (3), and the gasket (5) includes, at a position in alignment with the projection (4), a circular groove (6) that receives the ring-shaped projection (4), **characterised in that** the gasket (5) further comprises at least one circular projected portion (9) extending along the inner circumference thereof, and the inner cylinder (2) further comprises a circular groove (10) arranged in a position in alignment with the circular projected portion (9),
and **in that** the axial width of the gasket (5) is smaller than the axial width of the circular recess (3), and wherein a relief space (7) equal to a difference between the axial width of the gasket (5) and the axial width of the circular recess (3) is arranged behind the gasket (5).

2. The pipe joint according to claim 1, wherein the gasket (5) comprises at least one circular projected portion (8) extending along the outer circumference thereof.

## Patentansprüche

1. Rohrverbindung mit einem Verbindungskörper (1) mit einem inneren Zylinder (2), um in ein Rohr eingefügt zu werden, einem Verbindungsgehäuse (11), das außerhalb des inneren Zylinders (2) angeordnet ist und mit dem Verbindungskörper (1) verbunden ist, einem Spannring (12), der vor dem Verbindungsgehäuse (11) angeordnet ist, einer Überwurfmutter (13), die den Spannring (12) innerhalb von ihr hält und um das vordere Ende des Verbindungsgehäuses (11) geschraubt ist, und einer Dichtung (5), die an dem Außenumfang des inneren Zylinders (2) angeordnet ist, wobei
der innere Zylinder (2) einen kreisförmigen Ausschnitt (3) enthält, der sich an seinem Außenumfang erstreckt und entlang der axialen Richtung des inneren Zylinders (2) eine bestimmte Breite hat, wobei die Dichtung (5) um den kreisförmigen Ausschnitt (3) platziert ist,
der innere Zylinder (2) weiterhin einen ringförmigen Vorsprung (4) enthält, der sich in der Mitte der axialen Erstreckung des kreisförmigen Ausschnitts (3) erstreckt, und die Dichtung (5) bei einer Position in Ausrichtung mit dem Vorsprung (4) eine kreisförmige Nut (6) enthält, die den ringförmigen Vorsprung (4) aufnimmt,
**dadurch gekennzeichnet, dass** die Dichtung (5) weiterhin wenigstens einen kreisförmigen vorstehenden Bereich (9) aufweist, der sich entlang ihrem Innenumfang erstreckt, und der innere Zylinder (2) weiterhin eine kreisförmige Nut (10) aufweist, die bei einer Position in Ausrichtung mit dem kreisförmigen vorstehenden Bereich (9) angeordnet ist,
und dass die axiale Breite der Dichtung (5) kleiner als die axiale Breite des kreisförmigen Ausschnitts (3) ist, und wobei ein Aussparungsraum (7) gleich einem Unterschied zwischen der axialen Breite der Dichtung (5) und der axialen Breite des kreisförmigen Ausschnitts (3) hinter der Dichtung (5) angeordnet ist.

2. Rohrverbindung nach Anspruch 1, wobei die Dichtung (5) wenigstens einen sich entlang ihrem Außenumfang erstreckenden kreisförmigen vorstehenden Bereich (8) aufweist.

## Revendications

1. Joint de tuyau comprenant un corps de joint (1) doté d'un cylindre intérieur (2) prévu pour être inséré dans un tuyau, un boîtier de joint (11) placé à l'extérieur du cylindre intérieur (2) et raccordé au corps de joint (1), une bague de serrage (12) placée devant le boîtier de joint (11), un écrou borgne (13) maintenant la bague de serrage (12) à l'intérieur de celui-ci et vissé sur l'extrémité avant du boîtier de joint (11), et un joint d'étanchéité (5) placé sur la circonférence extérieure du cylindre intérieur (2), dans lequel
le cylindre intérieur (2) comporte une gorge circulaire (3) se prolongeant sur la circonférence extérieure de celui-ci et présentant une certaine largeur dans le sens axial du cylindre intérieur (2), dans lequel le joint d'étanchéité (5) est placé autour de la gorge circulaire (3),
le cylindre intérieur (2) comprend également une partie saillante annulaire (4) qui se prolonge jusqu'au milieu du prolongement axial de la gorge circulaire (3), et le joint d'étanchéité (5) comporte, dans l'alignement de la partie saillante (4), une rainure circulaire (6) destinée à recevoir la partie saillante annulaire (4),
**caractérisé par le fait que** le joint d'étanchéité (5) comporte également au moins une partie circulaire en saillie (9) se prolongeant le long de sa circonférence intérieure, et que le cylindre intérieur (2) comporte également une rainure circulaire (10) positionnée de façon à être alignée avec la partie circulaire en saillie (9),
et **par le fait que**, la largeur dans le sens axial du joint d'étanchéité (5) est inférieure à la largeur axiale de la gorge circulaire (3), et dans lequel un espace de décharge (7) égal à la différence entre la largeur axiale du joint d'étanchéité (5) et la largeur axiale de la gorge circulaire (3) est prévu derrière le joint d'étanchéité (5).

2. Joint de tuyau selon la revendication 1, dans lequel le joint d'étanchéité (5) comporte au moins une partie circulaire saillante (8) se prolongeant le long de sa circonférence extérieure.
